Europäisches Patentamt

European Patent Office

Office européen des brevets

(19)

(11) **EP 0 287 272 B2**

(12) **NEW EUROPEAN PATENT SPECIFICATION**

(45) Date of publication and mention
of the opposition decision:
**21.03.2001 Bulletin 2001/12**

(45) Mention of the grant of the patent:
**03.08.1994 Bulletin 1994/31**

(21) Application number: **88303103.1**

(22) Date of filing: **07.04.1988**

(51) Int Cl.7: **C08L 23/04**, B32B 27/32

(54) **Stretch wrap film exhibiting inherent cling**

Streckbarer Umhüllungsfilm, der Hafteigenschaften zeigt

Film d'emballage par étirage présentant un accrochage inhérent

(84) Designated Contracting States:
**BE DE FR GB IT NL**

(30) Priority: **17.04.1987 US 39892**

(43) Date of publication of application:
**19.10.1988 Bulletin 1988/42**

(73) Proprietor: **MOBIL OIL CORPORATION
New York New York 10017 (US)**

(72) Inventor: **Simmons, Kathryn Ann
Macedon New York 14502 (US)**

(74) Representative: **Hucker, Charlotte Jane et al
Gill Jennings & Every
Broadgate House,
7 Eldon Street
London EC2M 7LH (GB)**

(56) References cited:
**EP-A- 0 067 138          EP-A- 0 109 512
US-A- 4 379 197**

• **WPI, FILE SUPPLIER, no. AN-77-62037y,
Derwent Publications Ltd, London, GB; &
JP-A-52 086 440**

EP 0 287 272 B2

## Description

This invention relates to stretch wrap thermoplastic films: methods of forming unitized goods or a plurality of goods, e.g., a pallet load, by application of stretch wrap film thereto; and to the stretch-wrapped units resulting therefrom. The invention is particularly concerned with a stretch wrap film comprising linear low density polyethylene (LLDPE).

This invention seeks to provide a monolayer plastics stretch wrap film exhibiting significant cling on at least one of its major surfaces without the addition of a cling additive to the film.

It is another object of the present invention to provide a coextruded multilayer, especially a coextruded multilayer, stretch film structure wherein at least one surface layer comprises an LLDPE exhibiting significant cling on the exposed surface in the absence of cling additive.

According, therefore, to invention a linear low density polyethylene (LLDPE) the LLDPE containing from 3 to 15 weight percent of material extractible with n-hexane is used to impart a cling force of at least 75 g on at least one surface of a plastics stretch film.

The resulting stretch film can be used to overwrap one or a group of articles to form a unitized packaged unit employing any of the known and conventional tension-wrapping techniques.

The term "linear low density polyethylene" (LLDPE) is to be understood in the recognized sense of a copolymer of ethylene and small amounts, e.g., from 1 to 10 weight percent, of at least one other copolymerized alpha-monoolefin comonomer typically possessing from 4 to 10, and preferably, from 5 to 8, carbon atoms. Typical comonomers include butene-1, 1,3-methyl-butene-1, 1.3-methyl-pentene-1,hexene-1, 4-methyl-pentene-1, 3-methyl-hexene-1; octene-1, decene-1, etc. The LLDPE resins are prepared at relatively low pressures employing coordination-type catalysts. Reference may be made to U.S. Patents 3,645,992; 4,076,698; 4,011,382; 4,163,831; 4,205,021; 4,302,565; 4,302,566; 4,359,561; and 4,522,987 for details of the manufacture and properties of LLDPE resins.

However, not all LLDPE resins are suitable for use in this invention. It has been discovered that only those LLDPE resins possessing a relatively high weight percentage of material extractible with n-hexane are suitable for this purpose. Whatever the source of the exhibited cling, it is an essential requirement of this invention that the level of material extractible with n-hexane ranges from 3 to 15 weight percent of material extractible with n-hexane, so as to provide a film inherently exhibiting an appreciable level of cling. As measured by the method described in 21 C.F.R. 177.1520 an LLDPE film of about $3.81 \times 10^{-5}$ m (1.5 mils) thickness containing from 3 weight percent to 15 weight percent material extractable with n-hexane will exhibit a significant level of cling. Preferably, the LLDPE film or film layer of this invention will contain from 4 to 10 and, still more preferably, from 5 to 8, weight percent of material extractable with n-hexane.

The level of material extractible with n-hexane in the film of this invention can also be expressed in terms of a specific cling force. Employing the test procedure hereinafter described, the extractible component of the LLDPE film should be such as to provide a cling force of at least 75 grams, preferably at least 100 grams and more preferably at least 200 grams. Cling forces exceeding 200 grams, e.g., 300-400 grams, are also within the scope of the invention.

The preferred LLDPE resins used to prepare stretch films of this invention have a density from 0.905 to 0.940 g/ml and a melt index from 1 to 6.

The LLDPE resin can be blended with minor amounts, e.g., up to 20 weight percent total, of one or more other compatible resins to achieve a range of desired properties in the film product. Thus, for example, such resins as EVA copolymer, HPLDPE and other LLDPE resins possessing conventionally low·levels of material extractible with n-hexane can be blended with the LLDPE used to prepare stretch films of this invention.

A film structure may be provided which comprises an LLDPE film as herein defined and a second surface layer comprising a thermoplastic polymer which does not inherently exhibit significant cling.

For example, the LLDPE can constitute outer layer A of a coextruded AB film structure in which layer B, which may exhibit self-slip, is a film fabricated from a flexible film-forming resin possessing little, if any, inherent cling, e.g., a linear low density polyethylene containing a low level, e.g., less than 3 weight percent, of material extractible with n-hexane which is characteristic of commercial linear low density polyethylene film-grade resins which typically comprise a copolymer of ethylene and alpha-olefin containing from 4 to 10 carbon atoms: a high pressure low density polyethylene (HPLDPE), preferably one having a density from 0.890 to 0.940 g/ml and a melt index from 1 to 25; isotactic polypropylene; ethylene-propylene copolymer; polyester and polyamide. These and other non-cling resins can be provided as blends of two or more compatible non-cling resins in any desired ratio.

Other possible film structures include a coextruded ABA composite film structure in which both outer, or skin, layers A comprises an LLDPE film as herein defined and core layer B is fabricated from one of the aforementioned non-cling resins, and a coextruded ACB composite film structure in which layers A and B are as previously described. If desired, the resin from which the C layer is fabricated can be selected for its barrier properties.

The LLDPE resins which are used to prepare the stretch films and film structures herein can contain known cling additives to augment the cling already inherently exhibited by the resins. Examples of useful cling additives include polyisobutylenes having a number average molecular weight in the range from 1,000 to 3.000 grams per mole as measured by vapor phase osmometry; amorphous atactic polypropylenes, e.g., those having an average molecular weight of 2000, polyterpenes and ethylene-vinyl acetate copolymers containing from 5 to 15 weight percent copolymerized vinyl acetate. The optional cling additive can be present in the A layer in a concentration from 0.5 to 10 weight percent of the resin. Other conventional film additives such as antioxidants, UV stabilizers, pigments and dyes can be present in the usual amounts.

In multilayer film structures possessing a non-cling surface layer, said layer can contain an anti-cling additive and/or any other component which imparts a capability for self-slip; that is, relative movement between this layer and an adjacent layer of itself. This embodiment overcomes the problem of the tendency of a pallet load overwrapped with a stretch wrap film possessing cling on both of its major surfaces from destructively pulling away from a similarly overwrapped pallet load with which it is in contact. The anti-cling additive present in the non-cling exterior layer can be any of those previously known to be useful for this purpose, e. g., crystalline and amorphous silicas including synthetic sodium aluminum silicates such as $Na_2O.Al_2O_3$. $SiO_24H_2O$, diatomaceous earth and talc having a particle size range from 0.5 to 20 $\mu$m. The anti-cling agent can be present in an amount from 500 to 20,000 ppm. Other additives, e.g., anti-blocking agents and coefficient of friction (COF) reducing agents can be present in the non-cling layer(s) of the multilayer film structures of this invention.

Film thickness, whether of a monolayer or a multilayer film structure, can vary widely. A total film thickness from 1.02 to 6.35 x $10^{-5}$ m (0.4 to 2.5 mils), preferably from 1.27 to 2.29 x $10^{-5}$ m (0.5 to 0.9 mils), is suitable for most applications. In the case of multilayer film structures the LLDPE containing a high level of material extractable with n-hexane in the outer layer(s) can represent from 10 to 90, and preferably from 30 to 80, percent of the total gage thickness with the other layer(s) representing the balance of the thickness.

Either or both major surfaces of the film can be treated by such known and conventional post-forming operations; for example, corona discharge and/or flame treatment to modify the printability or ink receptivity of the surface(s) or to impart other desirable characteristics thereto.

The stretch film of this invention can, if desired, be provided in the non-stretched, i.e., unoriented, or at most only modestly stretched, state prior to use or it can be provided as a pre-stretched film with little, if any, additional stretch being applied to the film at the time of use. Thus, the film herein can be capable of undergoing stretch with a deformation ratio of up to 400, and preferably from 75 to 250, linear percent during the overwrapping operation.

Where the manufacture of a multilayer film is concerned, it is preferred to employ known and conventional techniques of coextrusion to assemble the composite structure. Reference may be made to U.S. Patent No.3,748,962 for details of a coextrusion procedure which can be employed in the fabrication of a multilayer film structure in accordance with this invention.

In the Examples which follow, the procedure for determining the amount of material extractible with n-hexane present in the LLDPE films was determined in accordance with 21 C.F.R. 117.1520. The procedure for determining the cling force exhibited by the films was as follows:

As measured by this procedure, cling is the film property which causes it to adhere to itself or to another specified surface, e.g., a film surface fabricated from a different resin.

Apparatus

1. Testing machine with a constant rate of grip separation. For example, an Instron machine equipped as follows:

a. One lightweight jaw equipped with 2.54 x $10^{-2}$m x 3.81 x $10^{-2}$m (1" x1$\frac{1}{2}$") flat rubber faced grips.
b. Cling attachment
c. 500 gram load cell or 4540 gram (10 lb.) load cell
d. If using pneumatic grips, air supply 514.4 to 582.3 kPa (60-70 psig) with Daltech filter model 110 (or equal) - Daltech Engineering, Century Park, New Castle, Delaware

2. 12.7 x $10^{-2}$m x 50.8 x $10^{-2}$m (5" x 20") sample template
3. 50.8 x $10^{-2}$m x 16.51 x $10^{-2}$m (2" x 6$\frac{1}{2}$") sample template
4. Sample cutter - JDC precision sample cutter, 2.54 x $10^{-2}$m (1") width. Manufacturer: Thwing-Albert Instrument Co., Philadelphia, PA
5. Safety razor blade
6. 50.8 x $10^{-2}$m x 7.62 x $10^{-2}$m (2" x 3") wide soft bristled paint brush
7. 30.48 x $10^{-2}$m (12") clear plastic ruler
8. 1.27 x $10^{-2}$m ($\frac{1}{2}$") wide double-coated tape (Scotch No. 665 of the 3M Corporation, or equivalent)
9. 12.7 x $10^{-2}$m x 20.32 x $10^{-2}$m (5" x 8") piece of glass.

## PROCEDURE

### A. Instrument Preparation

1. Install load cell and allow 15 min. warm-up period. Note: Install upper lightweight jaw if using 500 gram load cell. On Instron Model 1130 toggle switch adjacent to full scale load knob to be in 'M' position when using gram load cell.

2. Remove lower Instron jaw and install cling attachment using locking pin to secure.

3. Zero, balance, and calibrate the Instron.

4. Feed the end of the string not fastened to the clamp through the pulley on the cling attachment and place in the center of the upper jaw.

5. With the clamp resting at the base of the incline (which is in position on the base plate), adjust the crosshead, or the amount of string pulled through the grips, or both in combination, to achieve a distance of $12.7 \times 10^{-2}$m x $17.78 \times 10^{-2}$ (5" x 7") between the top of the pulley and the bottom of the grips. Tighten the upper jaw. Adjust the crosshead return stop as necessary.

6. Install gears for $12.7 \times 10^{-2}$m/min. (5"/min.) crosshead speed and $50.8 \times 10^{-2}$m/min. (20"/min.) chart speed. Be sure they are correctly meshed.

### B. Preparation Test Films

1. From the sample to be tested, cut a full width by min. $76.2 \times 10^{-2}$m (30") long sheet of clean film, peeling back several wraps if necessary. Mark the machine direction (MD) on the sheet sample.

2. Place the sheet sample on a clean glass cutting surface and smooth out wrinkles by grasping at corners or edges. Do not touch film test surface.

3. Using sample templates and safety razor blade, cut $12.7 \times 10^{-2}$m/min. (5"/min.) TD X $50.8 \times 10^{-2}$m/min. (20"/min.) MD sample and from the same MD location, a $5.08 \times 10^{-2}$m (2") TD X $16.51 \times 10^{-2}$m ($6\frac{1}{2}$") MD sample from the sheet sample.

4. Label the inside surface of the test specimens prior to taking off the cutting table, with for example, the letter A. Optionally, label the aside surface (letter B). Marks should not be located in test surface area.

5. Place the $5.08 \times 10^{-2}$m (2") x $16.51 \times 10^{-2}$m ($6\frac{1}{2}$") sample, inside surface (A) up, between two clean pieces of paper and use the ODC cutter to obtain a $2.54 \times 10^{-2}$m (1") TD X $16.51 \times 10^{-2}$m ($6\frac{1}{2}$") MD sample sandwich.

Note: Sample edges must be clean cut. Discard and recut if they are not. Slow operation of the cutter will usually help give a clean cut.

### TEST OPERATION

Note: All testing to be inside surface (A) to outside surface (b) unless otherwise specified. Run nstron on 1lb. Full Scale Load if using 10lb. load cell.

1. Lift the incline place fixture from the cling attachment base plate. Place the $12.7 \times 10^{-2}$m (5") x $50.8 \times 10^{-2}$m (20") sample, inside surface (A) down, on the base plate with the end of the sample flush with the end of the base plate.

2. Reset the incline plane fixture in the slots on the base plate.

3. Grasp the corners of the film sample extending beyond the base of the incline plane, pull back over the plane surface tautly, eliminate wrinkles in the test area, and clamp. A slight amount of stretching of the film is acceptable. Do not touch the sample test area. (The sample test area is the area between the two parallel lines running the length of the incline.)

4. Grasp the $2.54 \times 10^{-2}$ m x $16.51 \times 10^{-2}$ m (1" x 6 1/2") paper/film/paper sample sandwich between thumb and forefinger near one end. Slice approximately $1.27 \times 10^{-2}$ m (1/2") of the film past the ends of the paper. Do not touch sample test surface with fingers (side that is in contact with the paper).

5. With the paint brush in the other hand, place the end of the film sample directly on the horizontal mark at the top of the incline with the sides between the two parallel lines drawn on the incline.

6. Lay the film sample with paper still in place down between the two parallel lines to determine whether the sample was placed squarely at the top. Insuring a square cut on the sample end will help eliminate this problem.

7. If the sample does not appear to fall within the lines without wrinkling, pull up the sample and reposition following step 5. Discard sample and recut if sample is not positioned properly after three attempts.

8. Once the sample is positioned squarely, brush the sample end down with moderate pressure. Grasp the opposite end of the paper which is laying between the parallel lines and slowly pull the paper away from the film following it at the other end with the brush to insure good contact between the sample surfaces (apply moderate, consistent pressure on the brush and do not re-brush the sample).

9. The $2.54 \times 10^{-2}$ m x $16.51 \times 10^{-2}$ m (1" x 6 1/2") sample must lay between the marks on the incline with no wrinkles and a minimum of air bubbles. Sample may be partially lifted and reset with moderate brush stroke a maximum of three times before having to be discarded and recut.

10. Place a small piece of double-coated tape on the end of the film sample and place squarely in the clamp attached to the string. (The tape will help eliminate slippage in the clamp during testing.)

11. Locate the chart pen on a major horizontal division on the chart paper.

12. Turn the chart pen on.

13. Activate crosshead.

14. When the film has separated to the lower horizontal mark on the incline, turn the chart on.

15. When the two film layers have completely separated, turn the chart and pen off, return the crosshead, and remove the film samples.

16. Repeat steps 1-15 for each replicate.

Calculations

The film layers are separated at a constantly changing angle, thus the force required to separate the layers is also changing. To standardize the results, the cling value is calculated from that point on the curve where the string attached to the sample is horizontal with the base plate.

1. Draw a straight line through the best average slope of the curve. Recommended procedure:
Place the ends of the clear ruler at the starting and ending points of the curve. Move the ruler right or left, maintaining the original angle, until the best average is achieved.
2. Count the number of vertical chart divisions between the point the chart is turned on and the point the film layers separate. Round to the nearest .1.
3. Multiply number of chart divisions (from Step 2) by .45. Round to the nearest .1.
4. From the point the chart was turned on, count up number of chart divisions from Step 3, drawing a horizontal line at this point through the slope. Record the chart reading at the point of intersect in chart divisions rounding to the nearest .1.
5. Calculate cling force as follows:

$$\text{Cling, g} = \frac{CR \times FSL}{D}$$

Where:

CR = Chart reading at intersect (in chart divisions)
FSL = Full scale load (g)
D = Number of chart scale divisions (typically 100 for most Instron chart paper)

Comparative Example 1

Dow 2088 LLDPE (ethylene-octene-1 copolymer) containing approximately 2 to 2.5 weight percent n-hexane extractibles at 271°C (520o F.) was extruded through a slot die onto a cast roll at line speeds of 750 ft/min to provide a film. The cling force of this film was 65 gm, a level of cling too low for a commercial stretch wrap film. Cling agent would have to be added to this film to provide an acceptable cling force.

The following Examples illustrate the invention.

Example 1

Comparative Example 1 was substantially repeated but with Dow 4002 LLDPE (ethylene-octene-1 copolymer) containing approximately 3 to 3.5 weight percent n-hexane extractibles. The film possessed a cling force of 163 g. This is a significant cling force and renders the film suitable for commercial stretch wrap application with or without the presence of added cling agent.

Example 2

Comparative Example 1 was substantially repeated but with Exxon LL3003.55 LLDPE (ethylenehexene-1 copolymer) containing approximately 6 to 6.5 weight percent n-hexane extractibles. The film possessed a cling property of 212 g which is entirely acceptable for commercial wrap application.

Example 3

Employing the coextrusion procedure of U.S. Patent No. 3,748,962, an A/B composite film of 2.29 x $10^{-5}$ m (0.9 mils) thickness is formed composed of an 80% A layer thickness of the LLDPE of Example 2 and a 20% B layer thickness of HPLDPE having a melt index of 2.0 and a density of 0.920 g/ml and containing 5,000 PPM of a synthetic sodium aluminum silicate of the approximate formula $Na_2O. Al_2O_3.2SiO_2.4H_2O$. The film demonstrates good cling on the exposed surface of layer A and a slide property on the exposed surface of noncling layer B.

**Claims**

1. Use of a linear low density polyethylene (LLDPE) which inherently contains 3 to 15 weight percent of material extractable with n-hexane to impart a cling force of at least 75 g on at least one surface of a plastics stretch film.

2. Use according to claim 1, wherein the LLDPE comprises a copolymer of ethylene and alpha-olefin comprising from 4 to 10 carbon atoms.

3. Use according to claim 2, wherein the alpha-olefin comprises butene-1; 4-methylpentene-1; hexene-1; or octene-1.

4. Use according to any preceding claim, wherein the film contains from 4 to 10 weight percent material extractable with n-hexane for a film of 3.81 $\times$ $10^{-5}$ m (1.5 mils) thickness.

5. Use according to any preceding claim, wherein the film has a deformation ratio, in wrapping service, of up to 400 linear percent.

6. Use according to any preceding claim, wherein the film also comprises a cling additive.

7.  Use according to any preceding claim wherein the cling force is at least 100g.

8.  Use according to any preceding claim, wherein the LLDPE is blended with a minor amount of at least one other compatible film-forming resin.

9.  Use according to claim 8, wherein the LLDPE is blended with up to 20 weight percent total of at least one other compatible film-forming resin.

10. Use according to any preceding claim, wherein the film comprises a first layer comprising the LLDPE and a second surface layer comprising a thermoplastic polymer which does not inherently exhibit significant cling.

11. Use according to claim 10, wherein the second layer comprises a linear low density polyethylene.

12. Use according to claim 10 or 11, wherein the linear low density polyethylene of the second layer comprises a copolymer of ethylene and alpha-olefin comprising from 4 to 10 carbon atoms.

13. Use according to claim 10, wherein the second layer comprises a high pressure low density polyethylene.

14. Use according to any of claims 10 to 13, wherein the second layer exhibits self-slip.

15. Use according to any of claim 10 to 14, wherein the thermoplastic polymer of the second layer comprises an anti-cling additive.


**Patentansprüche**

1.  Verwendung eines linearen Polyethylens mit niedriger Dichte (LLDPE), das naturgemäß 3 bis 15 Gew% eines mit n-Hexan extrahierbaren Materials enthält, zur Erzeugung einer Haftkraft von mindestens 75 g an mindestens einer Oberfläche eines Kunststoffstreckfolie.

2.  Verwendung nach Anspruch 1, worin das LLDPE ein Copolymer aus Ethylen und einem $\alpha$-Olefin mit 4 bis 10 Kohlenstoffatomen enthält.

3.  Verwendung nach Anspruch 2, worin das $\alpha$-Olefin Buten-1, 4-Methylpenten-1, Hexen-1 oder Octen-1 enthält.

4.  Verwendung nach einem der vorstehenden Ansprüche, worin die Folie 4 bis 10 Gew% eines mit n-Hexan extrahierbaren Materials enthält, für einen Film mit einer Dicke von 3,81 x $10^{-5}$ m (1,5 mils).

5.  Verwendung nach einem der vorstehenden Ansprüche, worin der Film bei einem Verpackungsvorgang ein Deformationsverhältnis von bis zu 400 Linearprozent aufweist.

6.  Verwendung nach einem der vorstehenden Ansprüche, worin der Film auch ein Haftadditiv enthält.

7.  Verwendung nach einem der vorstehenden Ansprüche, worin die Haftkraft mindestens 100 g beträgt.

8.  Verwendung nach einem der vorstehenden Ansprüche, worin das LLDPE mit einer kleinen Menge mindestens eines weiteren verträglichen, filmbildenden Kunststoffs gemischt ist.

9.  Verwendung nach Anspruch 8, worin das LLDPE mit insgesamt bis zu 20 Gew% mindestens eines weiteren verträglichen, filmbildenden Kunststoffs gemischt ist.

10. Verwendung nach einem der vorstehenden Ansprüche, worin die Folie eine erste Schicht, die das LLDPE enthält, und eine zweite Oberflächenschicht, die ein thermoplastisches Polymer enthält, das seiner Natur nach keine deutliche Haftung zeigt, aufweist.

11. Verwendung nach Anspruch 10, worin die zweite Schicht ein lineares Polyethylen mit niedriger Dichte enthält.

12. Verwendung nach Anspruch 10 oder 11, worin das lineare Polyethylen mit niedriger Dichte der zweiten Schicht ein Copolymer aus Polyethylen und einem $\alpha$-Olefin mit 4 bis 10 Kohlenstoffatomen enthält.

13. Verwendung nach Anspruch 10, worin die zweite Schicht ein Hochdruckpolyethylen mit niedriger Dichte enthält.

14. Verwendung nach einem der Ansurpüche 10 bis 13, worin die zweite Schicht selbstgleitend ist.

15. Verwendung nach einem der Ansprüche 10 bis 14, worin das thermoplastische Polymer der zweiten Schicht ein Antihaftadditiv enthält.


**Revendications**

1.  Utilisation de polyéthylène linéaire basse densité (LLDPE) contenant de façon inhérente de 3 à 15% en poids de matière pouvant être extraite avec du n-hexane, pour conférer une force d'adhérence d'au moins 75 g sur au moins l'une des surfaces d'un film étirable en matière plastique.

**2.** Utilisation selon revendication 1, dans laquelle le LLDPE comprend un copolymère d'éthylène et d'une d'alpha-oléfine ayant de 4 à 10 atomes de carbone.

**3.** Utilisation selon la revendication 2, dans laquelle l'alpha-oléfine comprend le butène-1, le 4-méthylpentène-1, le héxène-1 ou l'octène-l.

**4.** Utilisation selon l'une quelconque des revendications précédentes, dans laquelle le film contient de 4 à 10% en poids de matière pouvant être extraite avec du n-hexane pour un film de 3,81 x 10-5 m (1,5 mil) d'épaisseur.

**5.** Utilisation selon l'une quelconque des revendications précédentes, dans laquelle le film a un taux de déformation, lorsqu'il est utilisé pour l'emballage, allant jusqu'à 400% linéaire.

**6.** Utilisation selon l'une quelconque des revendications précédentes, dans laquelle le film contient aussi un agent d'adhérence.

**7.** Utilisation selon l'une quelconque des revendications précédentes, dans laquelle la force d'adhérence est d'au moins 100 g.

**8.** Utilisation selon l'une quelconque des revendications précédentes, dans laquelle le LLDPE est mélangé avec une quantité mineure d'au moins une autre résine filmogène compatible.

**9.** Utilisation selon la revendication 8, dans laquelle le LLDPE est mélangé avec une quantité allant jusqu'à 20% en poids au total d'au moins une autre résine filmogène compatible.

**10.** Utilisation selon l'une quelconque des revendications précédentes, dans laquelle le film comprend une première couche comprenant le LLDPE et une seconde couche de surface comprenant un polymère thermoplastique qui ne présente pas d'adhérence notable de façon inhérente.

**11.** Utilisation selon la revendication 10, dans laquelle la seconde couche comprend un polyéthylène linéaire basse densité.

**12.** Utilisation selon la revendication 10 ou 11, dans laquelle le polyéthylène linéaire basse densité de la seconde couche comprend un copolymère d'éthylène et d'une alpha-oléfine comprenant de 4 à 10 atomes de carbone.

**13.** Utilisation selon la revendication 10, dans laquelle la seconde couche comprend un polyéthylène basse densité haute pression.

**14.** Utilisation selon l'une quelconque des revendications 10 à 13, dans laquelle la seconde couche présente des propriétés d'auto-glissement.

**15.** Utilisation selon l'une quelconque des revendications 10 à 14, dans laquelle le polymère thermoplastique de la seconde couche comprend un additif anti-adhérence.